# EUROPEAN PATENT SPECIFICATION

(11) **EP 3 047 611 B1**
(45) Date of publication and mention of the grant of the patent: **18.12.2019**
(21) Application number: 13893670.3
(22) Date of filing: 16.09.2013
(51) Int. Cl.: H04L 12/24, H04L 12/28, H04L 12/46

(54) **MULTI-VIRTUALIZATION SCHEME SELECTION**
AUSWAHL EINES MEHRFACHVIRTUALISIERUNGSSCHEMAS
SÉLECTION DE PLUSIEURS SYSTÈMES DE VIRTUALISATION

(43) Date of publication of application: 27.07.2016
(73) Proprietor: Hewlett Packard Enterprise Development LP, Houston, TX 77070 (US)
(72) Inventor: GROVER, Rajeev, Roseville, California 95747 (US); KRELL, Sherry, Roseville, California 95747 (US); YALAGANDULA, Praveen, Palo Alto, California 94304 (US)
(74) Representative: Haseltine Lake Kempner LLP
(86) International application number: PCT/US2013/059880
(87) International publication number: WO 2015/038155

(56) References cited:
- WO-A1-2012/055446
- US-A1- 2010 027 420
- US-A1- 2013 003 538
- US-A1- 2013 058 346
- US-A1- 2013 170 490
- US-A1- 2013 191 257
- NADEAU J DRAKE EDITORS JUNIPER NETWORKS B SCHLISSER Y REKHTER RAVI SHEKHAR JUNIPER NETWORKS NABIL BITAR T: "A Control Plane for Network Virtualized Overlays; draft-drake-nvo3-evpn-control-plane-00.txt ", A CONTROL PLANE FOR NETWORK VIRTUALIZED OVERLAYS; DRAFT-DRAKE-NVO3-EVPN-CONTROL-PLANE-00.TXT , INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 17 September 2012 (2012-09-17), pages 1-12, XP015087327, [retrieved on 2012-09-17]
- FLORIN BALUS DIMITRI STILIADIS NUAGE NETWORKS NABIL BITAR VERIZON KENICHI OGAKI KDDI: "Federated SDN-based Controllers for NVO3; draft-sb-nvo3-sdn-federation-01.txt", FEDERATED SDN-BASED CONTROLLERS FOR NVO3; DRAFT-SB-NVO3-SDN-FEDERATION-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 23 October 2012 (2012-10-23), pages 1-16, XP015088512, [retrieved on 2012-10-23]
- MD FAIZUL BARI ET AL: "Data Center Network Virtualization: A Survey", IEEE COMMUNICATIONS SURVEYS AND TUTORIALS, INSTITUTE OF ELECTRICAL AND ELECTRONICS ENGINEERS, US, vol. 15, no. 2, 1 April 2013 (2013-04-01), pages 909-928, XP011508078, ISSN: 1553-877X, DOI: 10.1109/SURV.2012.090512.00043

## Description

### Background

Tenants within a computing network (e.g., cloud computing network, etc.) can support a variety of virtualization schemes to communicate data. Tenants can include different virtual scheme capabilities. For example, some tenants can be capable of supporting virtual local area network (VLAN), a virtualization scheme, while some tenants may not be capable of supporting VLAN.
D1 (WO 2012/055446) discloses a method for providing resources from a physical network , provided by at least one physical network provider, to a virtual network provider, following the steps performed therein.
D2 (NADEAU J DRAKE EDITORS JUNIPER NETWORKS B SCHLISSER Y REKHTER RAVI SHEKHAR JUNIPER NETWORKS NABIL BITAR T: "A Control Plane for Network Virtualized Overlays) discloses method on how E-VPN protocol may be used as a control plane for VXLAN, NVGRE, MPLS, or Ethernet VLANs.
Document FLORIN BALUS DIMITRI STILIADIS NUAGE NETWORKS NABIL BITAR VERIZON KENICHI OGAKI KDDI, "Federated SDN-based Controllers for NVO3", discloses federated SDN-based controllers for NOV3.

### Brief Description of the Drawings

Figure 1 illustrates a diagram of an example of an environment for multi-virtualization scheme selection according to the present disclosure.
Figure 2 illustrates a diagram of an example of a system for multi-virtualization scheme selection according to the present disclosure.
Figure 3A illustrates a diagram of an example of a system for multi-virtualization scheme selection according to the present disclosure.
Figure 3B illustrates a diagram of an example computing device according to the present disclosure.
Figure 4 illustrates a flow diagram of an example method for multi-virtualization scheme selection according to the present disclosure.

### Detailed Description

The invention is set out in the independent claims 1, 6 and 11. Further embodiments are defined in the appended dependent claims.

A network (e.g., cloud computing network, etc.) can include a number of nodes (e.g., compute nodes, servers, etc.) that each include capabilities for supporting particular virtualization schemes (e.g., virtual local area networks (VLANs), Netlord, network virtualization using generic routing encapsulation (NVGRE), virtual extensible local area network (VXLAN), etc.). Virtualization schemes can include methods of communicating data (e.g., data packets, etc.) within a network. The capabilities for supporting virtualization schemes can be different for each of the number of nodes and/or for each of the number of tenants (e.g., occupants of space within a node, occupants of space hosted by a node, etc.) hosted (e.g., utilizing node resources, etc.) by each of the number of nodes. For example, a first tenant hosted by a particular node can have different operable virtualization schemes (e.g., virtualization schemes that can be supported (e.g., utilized) for communication, etc.) compared to a second tenant hosted by the particular node.

Multi-virtualization scheme selection can be utilized to provide for the utilization of a plurality of virtualization schemes for communication within a network. That is, a particular virtualization scheme from the plurality of virtualization schemes can be selected during runtime for communication of data. Multi-virtualization scheme selection can include determining a number of virtualization schemes between nodes (e.g., a pair of nodes) within the network. Determining the number of virtualization schemes can include determining which of a plurality of virtualization schemes are supported by each of the nodes within the network.

As described herein, each of the number of nodes and/or tenants hosted by the number of nodes can support different virtualization schemes to communicate data to other nodes and/or tenants hosted by other nodes. In some embodiments, a portion of the number of virtualization schemes that are operable (e.g., functional, etc.) for a first node or tenant hosted by the first node can be different than a portion of the number of virtualization schemes that are operable for a second node or tenant hosted by the second node.

Determining the number of virtualization schemes between the nodes within the network includes determining a number of operable virtualization schemes between the nodes that can be utilized to communicate data packets. As described herein, the nodes can include compute nodes and/or a tenant VM's hosted by each of the compute nodes (e.g., computing device, server, etc.).

In addition, a number of properties of the communication between the nodes can be analyzed. For example, the number of properties can include a type of flow (e.g., speed of flow, etc.), a determined number of middleboxes (e.g., firewall, packet prevention system, etc.), and a size of communication packets (e.g., relatively large data size, relatively small data size, etc.). A virtualization scheme can be selected from the number of virtualization schemes based on the number of properties of the communication between the nodes. For example, a virtualization scheme for communication between the nodes can be made based on the properties of the communication to be sent. In this example, the virtualization scheme can be selected in real time operation and can dynamically change from communication to communication based on the properties of the communication to be sent.

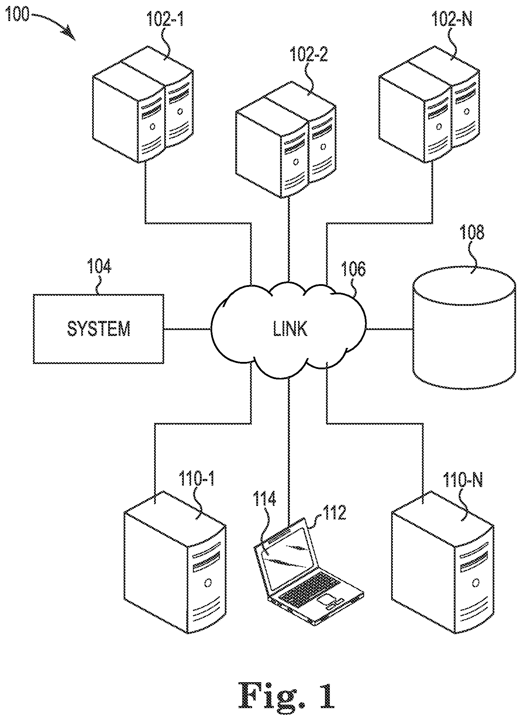

Figure 1 illustrates a diagram of an example of an environment 100 for multi-virtualization scheme selection according to the present disclosure. The environment 100 can include a system 104, a data store 108, server devices 102-1, 102-2, ..., 102-N, and/or client devices 110-1, ..., 110-N. The client devices 110-1, ..., 110-N can include a client device 114 that includes a user interface 112.

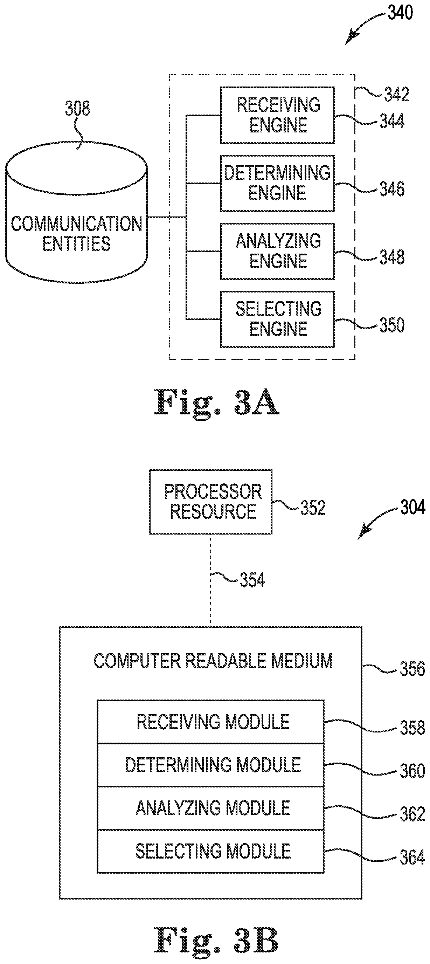

The system 104, as described herein, can represent a number of different combinations of hardware and software configured to select a virtualization scheme for the communication between nodes based on a number of properties of the communication. The system 104 can include the computing device 304 represented in Figure 3B.

The server devices 102-1, 102-2, ..., 102-N can be a computing device that can be configured to respond to network requests received from the client devices 110-1, 110-N, 112. The client devices 110-1, 110-N, 112 can include browsers and/or other applications to communicate requests with the system 104, data store 108, and/or server devices 102-1, 102-2, ..., 102-N via a communication link 106 (e.g., network, local area network (LAN), internet, etc.).

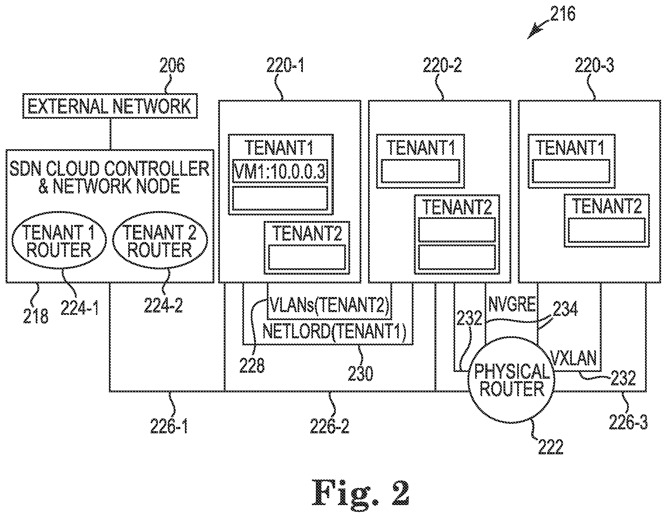

Figure 2 illustrates a diagram of an example of a system 216 for multi-virtualization scheme selection according to the present disclosure. The system 216 can include an external network 206 (e.g., network 106 as referenced in Figure 1, internet, local area network (LAN), wide area network (WAN), etc.). The system 216 can also include a software defined network (SDN) controller 218. The SDN controller 218 can include a number of tenant routers (e.g., Tenant 1 router 224-1, Tenant 2 router 224-2, etc.). The SDN controller 218 can be utilized to control and/or manage communication between a number of compute nodes 220-1, 220-2, 220-3 within the system 216. For example, the SDN controller 218 can select and implement a particular virtualization scheme for communication between the number of compute nodes 220-1, 220-2, 220-3. The number of compute nodes 220-1, 220-2, 220-3 can be a number of servers (e.g., computing devices, etc.). There are three compute nodes shown for example only. There can be a greater number or a fewer number of compute nodes within the system 216.

The SDN controller 218 can include software, hardware, and/or logic to perform a number of functions as described herein. For example, the SDN controller 218 can be a system such as system 340 and/or a computing device such as computing device 304 as referenced in Figure 3. That is, the SDN controller 218 can include hardware and/or a combination of hardware and programming to determine an optimal (e.g., efficient, fastest, most productive, user defined, etc.) and/or a desired virtualization scheme and select the optimal and/or desired virtualization scheme during run time for the communication between tenants, wherein the optimal virtualization scheme is based on the type of virtualization schemes that are operable for particular nodes and/or tenants and/or based on properties of the communication.

The SDN controller 218 can determine properties of the communication (e.g., data packets, etc.) to be sent from a first node and/or tenant to a second node and/or tenant. The properties of the communication can include, but are not limited to: packet size (e.g., bytes per packet, etc.), a number of virtualization schemes supported by the nodes (e.g., compute node 220-1 and compute node 220-2, etc.), user defined settings (e.g., defining particular packets to be communicated via a particular virtualization scheme, etc.), location of each node of the nodes, location of a physical router (e.g., switch, real router, hardware router, etc.), and/or a number of middleboxes (e.g., firewall, etc.) within the path of the communication. The SDN controller 218 can analyze a number of the properties of the communication to be sent between the number of compute nodes 220-1, 220-2, 220-3 and select a virtualization scheme for the communication between the nodes based on the number of properties.

The system 216 can represent a cloud computing network that includes the number of compute nodes 220-1, 220-2, 220-3. Each of the compute nodes can be connected via a number of links 226-1, 226-2, 226-3. The number of links can be a physical connection (e.g., Ethernet connection, etc.) between the number of compute nodes 220-1, 220-2, 220-3 and between the compute nodes 220-1, 220-2, 220-3 and the SDN controller 218. The physical router 222 can also be coupled to the number of compute nodes 220-1, 220-2, 220-3 via the number of physical connection 226-1, 226-2, 226-3. Each of the compute nodes 220-1, 220-2, 220-3 can include a number of tenants (e.g., virtual machines (VM), hosts, organization with a plurality of VM's, etc.). For example, compute node 220-1 can include a Tenant 1 and a Tenant 2. Each tenant hosted by the number of compute nodes 220-1, 220-2, 220-3 can have a number of VMs that are utilized by the tenant. For example, Tenant 1 can be a user account that can support a plurality of VMs. In this example, Tenant 1's VM's can be located on compute node 220-1, compute node 220-2 and compute node 220-3.

The number of tenants (e.g., Tenant 1, Tenant 2, etc.) can have corresponding tenants hosted by each of the other compute nodes 220-1, 220-2, 220-3. For example, Tenant 1 hosted by compute node 220-1 can have a corresponding Tenant 1 hosted by compute node 220-2. As described herein, each of the compute nodes 220-1, 220-2, 220-3 can support a variety of different virtualization schemes (e.g., type of virtual network communication, type of cloud network communication, etc.). For example, compute node 220-1 can have a fewer number of virtualization schemes that are operable compared to compute node 220-2. In this example, communication between a pair of nodes that includes compute node 220-1 and compute node 220-2 would be limited to the operable virtualization schemes between compute node 220-1 and compute node 220-2.

In addition, as described herein, each tenant hosted by each of the number of compute nodes 220-1, 220-2, 220-3 can also be limited to particular operable virtualization schemes when communicating with a corresponding tenant. For example, Tenant 1 hosted by compute node 220-1 can be limited to a number of virtualization schemes when communicating to Tenant 1 hosted by compute node 220-1. In this example, the virtualization scheme can include a Netlord virtualization scheme.

Current virtualization schemes have advantages and disadvantages that can be utilized by the SDN controller 218 to select a virtualization scheme that can promote the advantages of a particular virtualization scheme for a particular communication between nodes. That is, the SDN controller 218 can select an optimal virtualization scheme for communication between VM's from a particular tenant located hosted by nodes. For example, the SDN controller 218 can determine that data to be communicated from Tenant 1 hosted by compute node 220-1 to Tenant 1 hosted by compute node 220-2 should be communicated using a particular virtualization scheme (e.g., VLAN) via path 228. In this example, the SDN controller 218 can determine that the data to be communicated Will be optimized by utilizing VLAN based on the properties of the communication as described herein. In another example, the SDN controller 218 can determine that the data to be communicated from Tenant 2 hosted by compute node 220-1 to Tenant 2 hosted by compute node 220-2 should be communicated using a different virtualization scheme (e.g., Netlord) via path 230. In this example, the SDN controller 218 can determine that the data to be communicated will be optimized by utilizing Netlord based on the properties of the communication as described herein.

As described herein, one of the number of properties utilized by the SDN controller 218 can include a location of each node of the node pair in relation to a physical router (e.g., physical router 222, etc.). For example, the SDN controller 218 can utilize the location of compute node 220-2 and compute node 220-3 in reference to physical router 222. In this example, it can be determined by the SDN controller 218 that compute node 220-2 is on a first side (e.g., left side of diagram) of the physical router 222 and that compute node 220-3 is on a second side (e.g., right side of diagram) of the physical router 222. In this example, the SDN controller 218 can determine, based on the properties of the communication and/or the communication path, that the communication between Tenant 1 hosted by compute node 220-2 and Tenant 1 hosted by compute node 220-3 should be communicated by VXLAN via path 232 through the physical router 222. In addition, the SDN controller 218 can determine, based on the properties of the communication and/or the communication path, that the communication between Tenant 2 hosted by compute node 220-2 and Tenant 2 hosted by compute node 220-3 should be communicated by NVGRE via path 234 through the physical router 222.

As described herein, the SDN controller 218 can determine an optimal virtualization scheme to optimize the performance of communication between nodes and/or tenant VM's hosted by nodes. The optimal virtualization scheme can be an operable virtualization scheme with a greatest predicted speed (e.g., predicted speed of transfer of data packets from a first node to a second node, etc.) of communication from the number of operable virtualization schemes. The SDN controller 218 can dynamically (e.g., prior to each communication, determined upon request of communication and prior to sending the communication, etc.) determine a virtualization scheme for each communication within the system 216. That is, the SDN controller 218 can optimize the virtualization scheme for each communication between each node based on the properties of the communication and/or the communication paths available.

Figure 3A illustrates a diagram of an example of a system 340 for multi-virtualization scheme selection according to the present disclosure. The system 340 can include a data store 308 (e.g., data store 108 as referenced in Figure 1, etc.), a system 322, and/or a number of engines 342, 346, 348, 350. The system 322 can be in communication with the data store 308 via a communication link, and can include the number of engines (e.g., receiving engine 354, determining engine 346, analyzing engine 348, selecting engine 350, etc.). The system 322 can include additional or fewer engines than illustrated to perform the various functions described herein. The system can represent software and/or hardware of an SDN controller (e.g., SDN controller 218 as referenced in Figure 2, etc.).

The number of engines can include a combination of hardware and programming that is configured to perform a number of functions described herein (e.g., select an operable virtualization scheme from the determined number of operable virtualization schemes based on the number of properties of the communication between nodes, etc.). The programming can include program instructions (e.g., software, firmware, etc.) stored in a memory resource (e.g., computer readable medium, machine readable medium, etc.) as well as hard-wired program (e.g., logic).

The receiving engine 344 can include hardware and/or a combination of hardware and programming to receive information relating to virtualization scheme capabilities for a plurality of nodes (e.g., compute nodes 220-1, 220-2, 220-3 as referenced in Figure 2, etc.). In addition, the receiving engine 344 can receive user defined inputs relating to specifications that are desired by the user. For example, the user defined inputs can specify a virtualization scheme for particular types of data packets and/or communication between particular nodes.

The determining engine 346 can include hardware and/or a combination of hardware and programming to determine a number of operable virtualization schemes for a number of node pairs from the plurality of nodes based on the received information. The determining engine 346 can include hardware and/or a combination of hardware and programming to determine virtualization schemes between node pairs that can be utilized to communicate data packets between the node pairs.

The analyzing engine 348 can include hardware and/or a combination of hardware and programming to analyze communication and a number of communication paths between a pair of nodes from the plurality of nodes. As described herein, the communication between the pair of nodes can be analyzed to determine properties of the communication and the number of communication paths.

The selecting engine 350 can include hardware and/or a combination of hardware and programming to select an operable virtualization scheme from the determined number of operable virtualization schemes based on the number of properties of the communication and the number of communication paths between the pair of nodes. As described herein, the selecting engine 350 can select an operable virtualization scheme that is an optimized virtualization scheme for communicating the specific communication between the node pairs. That is, the selecting engine 350 can select a virtualization scheme that promotes advantages of particular virtualization schemes while avoiding negatives of other virtualization schemes. For example, when the data packets of the communication are relatively large, the selecting engine 350 can select a virtualization scheme that promotes a speed and accuracy of communicating relatively large data packets.

Figure 3B illustrates a diagram of an example computing device 304 according to the present disclosure. The computing device 304 can utilize software, hardware, firmware, and/or logic to perform a number of functions described herein.

The computing device 304 can be any combination of hardware and program instructions configured to share information. The hardware, for example can include a processing resource 352 and/or a memory resource 356 (e.g., computer-readable medium (CRM), machine readable medium (MRM), database, etc.) A processing resource 352, as used herein, can include any number of processors capable of executing instructions stored by a memory resource 356. Processing resource 352 may be integrated in a single device or distributed across multiple devices. The program instructions (e.g., computer-readable instructions (CRI)) can include instructions stored on the memory resource 356 and executable by the processing resource 352 to implement a desired function (e.g., select an operable virtualization scheme with a greatest predicted speed of communication from the number of operable virtualization schemes, etc.).

The memory resource 356 can be in communication with a processing resource 352. A memory resource 356, as used herein, can include any number of memory components capable of storing instructions that can be executed by processing resource 352. Such memory resource 356 can be a non-transitory CRM or MRM. Memory resource 356 may be integrated in a single device or distributed across multiple devices. Further, memory resource 356 may be fully or partially integrated in the same device as processing resource 352 or it may be separate but accessible to that device and processing resource 352. Thus, it is noted that the computing device 304 may be implemented on a participant device, on a server device, on a collection of server devices, and/or on a combination of the user device and the server device.

The memory resource 356 can be in communication with the processing resource 352 via a communication link (e.g., path) 354. The communication link 354 can be local or remote to a machine (e.g., a computing device) associated with the processing resource 352. Examples of a local communication link 354 can include an electronic bus internal to a machine (e.g., a computing device) where the memory resource 356 is one of volatile, non-volatile, fixed, and/or removable storage medium in communication with the processing resource 352 via the electronic bus.

A number of modules 358, 360, 362, 364 can include CRI that when executed by the processing resource 352 can perform a number of functions. The number of modules 358, 360, 362, 364 can be sub-modules of other modules. For example, the determining module 360 and the analyzing module 362 can be sub-modules and/or contained within the same computing device. In another example, the number of modules 358, 360, 362, 364 can comprise individual modules at separate and distinct locations (e.g., CRM, etc.).

Each of the number of modules 358, 360, 362, 364 can include instructions that when executed by the processing resource 352 can function as a corresponding engine as described herein. For example, the receiving module 358 can include instructions that when executed by the processing resource 352 can function as the receiving engine 344. In another example, the determining module 360 can include instructions that when executed by the processing resource 352 can function as the determining engine 346.

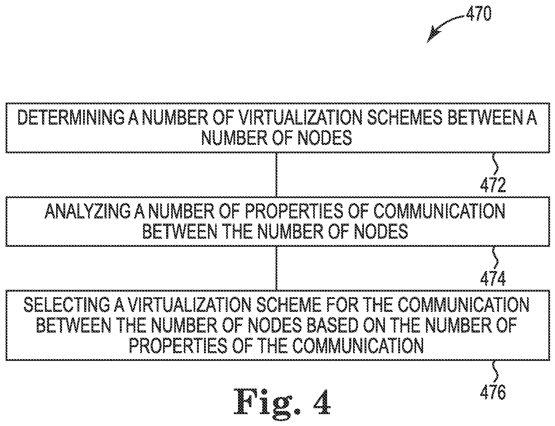

Figure 4 illustrates a flow diagram of an example method 470 for multi-virtualization scheme selection according to the present disclosure. As described herein, multi-virtualization scheme selection can dynamically implement an optimal virtualization scheme for each communication between a plurality of nodes within a network.

At box 472, the method 470 can include determining a number of virtualization schemes between a number of nodes. Determining the number of virtualization schemes between the number of nodes can include determining a plurality of virtualization schemes that can be utilized for communication by the number of nodes. In addition, determining the number of virtualization schemes can include determining a number of non-compatible virtualization schemes. Non-compatible virtualization schemes can be virtualization schemes that can be supported by a first node of the number of nodes and cannot be supported by a second node of the number of nodes.

At box 474, the method 470 can include analyzing a number of properties of communication between the number of nodes. Analyzing the number of properties can include analyzing a type of flow (e.g., location of the number of nodes compared to a physical router, etc.), a determined number of middleboxes (e.g., firewall, etc.), and a size of communication packets.

At box 476, the method 470 can include selecting a virtualization scheme for the communication between the number of nodes based on the number of properties of the communication. Selecting the virtualization scheme for the communication can include selecting a virtualization scheme from the determined number of virtualization schemes that has a highest rate of speed for communication between the number of nodes.

The method 470 can include receiving a number of user inputs that define an operable virtualization scheme to be selected based on the analyzed number of properties of communication. The user inputs can include specifications for communication particular data packets. For example, a user can input particular specifications when particular data packets are being communicated within a network. The particular data packets can include a particular type, a particular size, among other features of data packets.

As used herein, "a" or "a number of" something can refer to one or more such things. For example, "a number of virtualization schemes" can refer to one or more virtualization schemes. As used herein, "logic" is an alternative or additional processing resource to execute the actions and/or functions, etc., described herein, which includes hardware (e.g., various forms of transistor logic, application specific integrated circuits (ASICs), etc.), as opposed to computer executable instructions (e.g., software, firmware, etc.) stored in memory and executable by a processor.

The figures herein follow a numbering convention in which the first digit or digits correspond to the drawing figure number and the remaining digits identify an element or component in the drawing. Similar elements or components between different figures may be identified by the use of similar digits. For example, 108 may reference element "08" in Figure 1, and a similar element may be referenced as 308 in Figure 3.

The specification examples provide a description of the applications and use of the system and method of the present disclosure. Since many examples can be made without departing from the scope of the system and method of the present disclosure, this specification sets forth some of the many possible example configurations and implementations.

## Claims

1. A method for multi-virtualization scheme selection, comprising:
receiving, by a software defined network, SDN, controller (218, 340, 304), device information from a pair of nodes (220) from a number of nodes (220) of a network, wherein the device information includes a number of virtualization schemes;
the method **characterized in that** it further comprises
determining (472), by the SDN controller (218, 340, 304), a number of operable virtualization schemes from the number of virtualization schemes for a pair of nodes from the pair of nodes (220), wherein determining the number of operable virtualization schemes includes determining a plurality of virtualization schemes that can be supported for communication by the pair of nodes;
analyzing (474), by the SDN controller (218, 340, 304), a number of properties of a communication between the pair of nodes, whereby the number of properties of the communication is at least one of a list comprising a type of flow, speed of flow, a determined number of middleboxes, a determined number of firewalls, a determined number of packet prevention systems, a size of communication packets, data packets, location of the number of nodes compared to a physical router; and
selecting (476), by the SDN controller (218, 340, 304), an operable virtualization scheme for communication between the pair of nodes from the determined number of operable virtualization schemes based on the number of properties of the communication between the pair of nodes;
whereby a first tenant hosted by a particular node from the number of nodes has different operable virtualization schemes compared to a second tenant hosted by the particular node.

2. The method of claim 1, wherein determining the number of virtualization schemes includes determining a number of non-compatible virtualization schemes.

3. The method of claim 2, wherein the number of non-compatible virtualization schemes include virtualization schemes that are operable on a first node of the pair of nodes and not operable on a second node of the pair of nodes.

4. The method of claim 1, wherein the number of properties includes a type of flow, a determined number of middleboxes, and a size of communication packets.

5. The method of claim 1, wherein selecting the virtualization scheme for the communication includes selecting a virtualization scheme from the determined number of virtualization schemes that has a highest rate of speed for communication between the pair of nodes.

6. A non-transitory machine-readable medium storing a set of instructions executable by a processor, instructions which, when executed, cause a software defined network, SDN, controller to perform the method according to any of claims 1 to 5.

7. The medium of claim 6, wherein the instructions executable to select include instructions to dynamically select an operable virtualization scheme for each of a plurality of communication types.

8. The medium of claim 6, including instructions executable to receive a number of user inputs that define an operable virtualization scheme to be selected based on the analyzed number of properties of communication.

9. The medium of claim 8, wherein the user inputs include a specific operable virtualization scheme for each of a plurality of communication types.

10. The medium of claim 6, wherein the instructions executable to determine the number of operable virtualization schemes includes instructions executable to determine the number of operable virtualization schemes during run time.

11. A system for multi-virtualization scheme selection, comprising a software defined network, SDN, controller (218, 340, 304) in communication with a non-transitory machine readable medium having instructions executed by processing resources to implement a receiving engine (344), a determining engine (346), an analyzing engine (348) and a selecting engine (350), wherein the system is adapted to operate according to any of claims 1 to 5.

12. The system of claim 11, including instructions executable to implement the analyzing engine to determine a number of middleboxes within the number of communication paths, wherein middleboxes include security systems and prevention systems.

13. The system of claim 11, including instructions executable to implement the selecting engine to select an operable virtualization scheme that promotes a speed of the communication.

14. The system of claim 11, wherein the selecting engine includes instructions executable to select an operable virtualization scheme with a greatest predicted speed of communication from the number of operable virtualization schemes.

## Patentansprüche

1. Verfahren zum Auswählen eines Multivirtualisierungsschemas, das Folgendes umfasst:
Empfangen von Vorrichtungsinformationen von einem Knotenpaar (220) aus einer Anzahl von Knoten (220) eines Netzwerks durch einen Controller (218, 340, 304) eines softwaredefinierten Netzwerks (SDN), wobei die Vorrichtungsinformationen eine Anzahl von Virtualisierungsschemata beinhalten;
wobei das Verfahren **dadurch gekennzeichnet ist, dass** es ferner Folgendes umfasst:
Bestimmen (472) einer Anzahl von betriebsfähigen Virtualisierungsschemata aus der Anzahl von Virtualisierungsschemata für ein Knotenpaar aus dem Knotenpaar (220) durch den SDN-Controller (218, 340, 304), wobei das Bestimmen der Anzahl von betriebsfähigen Virtualisierungsschemata ein Bestimmen mehrerer Virtualisierungsschemata beinhaltet, die für eine Kommunikation durch das Knotenpaar unterstützt werden können;
Analysieren (474) einer Anzahl von Eigenschaften einer Kommunikation zwischen dem Knotenpaar durch den SDN-Controller (218, 340, 304), wodurch die Anzahl von Eigenschaften der Kommunikation eine Liste, die eine Fließart, Fließgeschwindigkeit, eine bestimmte Anzahl von Middleboxen, eine bestimmte Anzahl von Firewalls, eine bestimmte Anzahl von Paketverhinderungssystemen, eine Größe von Kommunikationspaketen, Datenpakete und/oder einen Ort der Anzahl von Knoten im Vergleich zu einem physischen Router umfasst; und
Auswählen (476) eines betriebsfähigen Virtualisierungsschemas für die Kommunikation zwischen dem Knotenpaar aus der bestimmten Anzahl von betriebsfähigen Virtualisierungsschemata durch den SDN-Controller (218, 340, 304) auf Basis der Anzahl von Eigenschaften der Kommunikation zwischen dem Knotenpaar;
wodurch ein erster Mandant, der von einem besonderen Knoten aus der Anzahl der Knoten gehostet wird, unterschiedliche betriebsfähige Virtualisierungsschemata aufweist im Vergleich zu einem zweiten Mandanten, der von dem besonderen Knoten gehostet wird.

2. Verfahren nach Anspruch 1, wobei das Bestimmen der Anzahl von Virtualisierungsschemata ein Bestimmen einer Anzahl von nichtkompatiblen Virtualisierungsschemata beinhaltet.

3. Verfahren nach Anspruch 2, wobei die Anzahl der nichtkompatiblen Virtualisierungsschemata Virtualisierungsschemata beinhaltet, die auf einem ersten Knoten des Knotenpaares betriebsfähig sind und auf einem zweiten Knoten des Knotenpaares nicht betriebsfähig sind.

4. Verfahren nach Anspruch 1, wobei die Anzahl der Eigenschaften eine Fließart, eine bestimmte Anzahl von Middleboxen und eine Größe von Kommunikationspaketen beinhaltet.

5. Verfahren nach Anspruch 1, wobei das Auswählen des Virtualisierungsschemas für die Kommunikation ein Auswählen eines Virtualisierungsschemas aus der bestimmten Anzahl von Virtualisierungsschemata beinhaltet, das eine höchste Geschwindigkeit für eine Kommunikation zwischen dem Knotenpaar aufweist.

6. Nichtflüchtiges maschinenlesbares Medium, das einen Satz Anweisungen speichert, die von einem Prozessor ausführbar sind, Anweisungen, die, wenn sie ausgeführt werden, einen Controller eines softwaredefinierten Netzwerks (SDN) veranlassen, das Verfahren nach einem der Ansprüche 1 bis 5 durchzuführen.

7. Medium nach Anspruch 6, wobei die zur Auswahl stehenden ausführbaren Anweisungen Anweisungen beinhalten, ein betriebsfähiges Virtualisierungsschema für jede von mehreren Kommunikationsarten dynamisch auszuwählen.

8. Medium nach Anspruch 6, einschließlich Anweisungen, die ausführbar sind, um eine Anzahl von Benutzereingaben zu empfangen, die ein betriebsfähiges Virtualisierungsschema definieren, das auf Basis der analysierten Anzahl von Eigenschaften der Kommunikation auszuwählen ist.

9. Medium nach Anspruch 8, wobei die Benutzereingaben ein spezifisches betriebsfähiges Virtualisierungsschema für jede von mehreren Kommunikationsarten beinhalten.

10. Medium nach Anspruch 6, wobei die Anweisungen, die ausführbar sind, um die Anzahl betriebsfähiger Virtualisierungsschemata zu bestimmen, Anweisungen beinhalten, die ausführbar sind, um die Anzahl der betriebsfähigen Virtualisierungsschemata während einer Laufzeit zu bestimmen.

11. System zum Auswählen eines Multivirtualisierungsschemas, das einen Controller (218, 340, 304) eines softwaredefinierten Netzwerks (SDN) in Kommunikation mit einem nichtflüchtigen maschinenlesbaren Medium umfasst, das Anweisungen aufweist, die von Verarbeitungsressourcen ausgeführt werden, um ein Empfangsmodul (344), ein Bestimmungsmodul (346), ein Analysemodul (348) und ein Auswahlmodul (350) zu implementieren, wobei das System dazu angepasst ist, nach einem der Ansprüche 1 bis 5 zu arbeiten.

12. System nach Anspruch 11, einschließlich Anweisungen, die ausführbar sind, um das Analysemodul dahin gehend zu implementieren, eine Anzahl von Middleboxen innerhalb der Anzahl von Kommunikationspfaden zu bestimmen, wobei Middleboxen Sicherheitssysteme und Schutzsysteme beinhalten.

13. System nach Anspruch 11, einschließlich Anweisungen, die ausführbar sind, um das Auswahlmodul dahin gehend zu implementieren, ein betriebsfähiges Virtualisierungsschema auszuwählen, das eine Kommunikationsgeschwindigkeit fördert.

14. System nach Anspruch 11, wobei das Auswahlmodul Anweisungen beinhaltet, die ausführbar sind, um ein betriebsfähiges Virtualisierungsschema mit einer größten vorhergesagten Kommunikationsgeschwindigkeit aus der Anzahl von betriebsfähigen Virtualisierungsschemata auszuwählen.

## Revendications

1. Procédé de sélection de plan multi-virtualisation, comprenant :
la réception, par un contrôleur de réseau défini par un logiciel, SDN, (218, 340, 304) d'informations de périphérique provenant d'une paire de nœuds (220) à partir d'un nombre de nœuds (220) d'un réseau, les informations de périphérique comprenant un nombre de plans de virtualisation ;
le procédé étant **caractérisé en ce qu'**il comprend en outre la détermination (472), par le contrôleur SDN (218, 340, 304), d'un nombre de schémas de virtualisation utilisables à partir du nombre de plans de virtualisation pour une paire de nœuds à partir de la paire de nœuds (220), la détermination du nombre de plans de virtualisation utilisables comprenant la détermination d'une pluralité de plans de virtualisation pouvant être pris en charge pour communication par la paire de noeuds ;
l'analyse (474), par le contrôleur SDN (218, 340, 304), d'un nombre de propriétés d'une communication entre la paire de nœuds, de sorte que le nombre de propriétés de la communication est au moins l'un d'une liste comprenant un type de flux, une vitesse de flux, un nombre déterminé de boîtes intermédiaires, un nombre déterminé de pare-feu, un nombre déterminé de systèmes anti-paquets, une taille de paquets de communication, des paquets de données, un emplacement du nombre de nœuds par rapport à un routeur physique ; et
la sélection (476), par le contrôleur SDN (218, 340, 304), d'un plan de virtualisation exploitable pour la communication entre la paire de nœuds parmi le nombre déterminé de plans de virtualisation exploitables sur la base du nombre de propriétés de la communication entre la paire de noeuds ;
de sorte qu'un premier locataire hébergé par un nœud particulier parmi le nombre de nœuds a des plans de virtualisation exploitables différents par rapport à un second locataire hébergé par le nœud particulier.

2. Procédé selon la revendication 1, dans lequel la détermination du nombre de plans de virtualisation comprend la détermination d'un nombre de plans de virtualisation non compatibles.

3. Procédé selon la revendication 2, dans lequel le nombre de plans de virtualisation non compatibles comprend des plans de virtualisation qui sont exploitables sur un premier nœud de la paire de nœuds et non exploitables sur un second nœud de la paire de nœuds.

4. Procédé selon la revendication 1, dans lequel le nombre de propriétés comprend un type de flux, un nombre déterminé de boîtes intermédiaires et une taille de paquets de communication.

5. Procédé selon la revendication 1, dans lequel la sélection du plan de virtualisation pour la communication comprend la sélection d'un plan de virtualisation parmi le nombre déterminé de plans de virtualisation ayant un débit le plus élevé pour la communication entre la paire de nœuds.

6. Support non transitoire lisible par machine, stockant un ensemble d'instructions exécutables par un processeur, instructions qui, lorsqu'elles sont exécutées, amènent un contrôleur de réseau défini par un logiciel, SDN, à exécuter le procédé selon l'une quelconque des revendications 1 à 5.

7. Support selon la revendication 6, dans lequel les instructions exécutables pour effectuer une sélection comprennent des instructions permettant de sélectionner de manière dynamique un plan de virtualisation exploitable pour chacun d'une pluralité de types de communication.

8. Support selon la revendication 6, comprenant des instructions exécutables pour recevoir un nombre d'entrées utilisateur qui définissent un plan de virtualisation exploitable à sélectionner sur la base du nombre analysé de propriétés de communication.

9. Support selon la revendication 8, dans lequel les entrées utilisateur comprennent un plan de virtualisation exploitable spécifique pour chacun d'une pluralité de types de communication.

10. Support selon la revendication 6, dans lequel les instructions exécutables pour déterminer le nombre de plans de virtualisation exploitables comprennent des instructions exécutables pour déterminer le nombre de plans de virtualisation exploitables pendant une durée d'exécution.

11. Système de sélection de plan multi-virtualisation, comprenant un contrôleur de réseau défini par un logiciel, SDN, (218, 340, 304) en communication avec un support non transitoire lisible par machine comportant des instructions exécutées par des ressources de traitement pour implémenter un moteur de réception (344), un moteur de détermination (346), un moteur d'analyse (348) et un moteur de sélection (350), le système étant conçu pour fonctionner selon l'une quelconque des revendications 1 à 5.

12. Système selon la revendication 11, comprenant des instructions exécutables pour implémenter le moteur d'analyse afin de déterminer un nombre de boîtes intermédiaires dans le nombre de voies de communication, les boîtes intermédiaires comprenant des systèmes de sécurité et des systèmes de prévention.

13. Système selon la revendication 11, comprenant des instructions exécutables pour implémenter le moteur de sélection afin de sélectionner un plan de virtualisation exploitable qui favorise une vitesse de communication.

14. Système selon la revendication 11, dans lequel le moteur de sélection comprend des instructions exécutables pour sélectionner un plan de virtualisation exploitable avec une vitesse de communication la plus grande prédite parmi le nombre de plans de virtualisation exploitables.
